# EUROPÄISCHE PATENTANMELDUNG

(11) **EP 2 444 443 A1**
(43) Veröffentlichungstag der Anmeldung: **25.04.2012**
(21) Anmeldenummer: 10187941.9
(22) Anmeldetag: 18.10.2010
(51) Int. Cl.: C08G 65/00

(54) **Hochfunktionelle Polyetherole sowie deren Herstellung und Verwendung**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Herstellung von hochfunktionellen Polyethern mit einer Farbzahl von kleiner 500 Hazen, indem man Tris(hydroxyethyl)isocyanurat (THEIC) und einen oder mehrere difunktionelle Alkohole und/oder Modifizierungsreagenzien mit Hilfe von sauren Katalysatoren umsetzt. Weiter betrifft die vorliegende Erfindung hochfunktionelle Polyether mit einer Farbzahl von kleiner 10, erhältlich nach einem solchen Verfahren, und die Verwendung dieser hochfunktionellen Polyether als Haftvermittler, Thixotropiermittel, Rheologiemodifier von Polymeren, in Druckfarben, Lacken und Beschichtungen oder als Bausteine zur Herstellung von Polyadditions- oder Polykondensationspolymeren.

## Beschreibung

Die vorliegende Erfindung betrifft ein Verfahren zur Herstellung von hochfunktionellen Polyethern mit einer Hazen-Farbzahl von kleiner 500, gemessen nach DIN ISO 6271, indem man Tris(hydroxyethyl)isocyanurat (THEIC) und einen oder mehrere difunktionelle Alkohole und/oder Modifizierungsreagenzien mit Hilfe von sauren Katalysatoren umsetzt. Weiter betrifft die vorliegende Erfindung hochfunktionelle Polyether mit einer Farbzahl von kleiner 500, erhältlich nach einem solchen Verfahren, und die Verwendung dieser hochfunktionellen Polyether als Haftvermittler, Thixotropiermittel, Rheologiemodifier, als Bestandteil von Druckfarben, Lacken und Beschichtungen oder als Bausteine zur Herstellung von Polyadditions- oder Polykondensationspolymeren.

Polyetherole werden üblicherweise aus der Reaktion von Wasser, Alkoholen oder Aminen durch ringöffnende Polymerisation mit Alkylenoxiden, zum Beispiel mit Ethylenoxid, Propylenoxid oder Butylenoxid oder deren Gemischen hergestellt. Technisch bedeutend sind Polyetherole auf Basis von Wasser, Glykolen, Glycerin, Trimethylolpropan, Pentaerythrit oder Zuckern als Startermolekül, die mit Ethylenoxid, Propylenoxid oder Ethylenoxid/Propylenoxid-Mischungen zu linearen Diolen oder sternförmig aufgebauten Polyolen reagieren. Solche Verfahren sind beispielsweise in Becker/Braun, Kunststoff-Handbuch Bd. 7, Polyurethane, Carl-Hanser-Verlag, München 1993, Seiten 58-67, erläutert.

So beschreibt beispielsweise Huozhayao Xuebao 2007, 30 (6), Seiten 13-16, die Umsetzung von THEIC mit verschiedenen Epoxyden durch ringöffnende Polymerisation mittels Bortrifluorid-Katalyse zu mehrfunktionellen Polyethern. Diese Synthese ist jedoch technisch aufwändig und führt nicht zu den von uns beanspruchten hochverzweigten Polyethern.

Die Herstellung von Polyethern durch Homokondensation von THEIC ist ebenfalls beschrieben. So offenbart beispielsweise US 3,293,224 die Herstellung von hochfunktionellen Polyethern unter saurer Katalyse zu oligomeren Polyethern. Die so erhaltenen Produkte sind bei Raumtemperatur glasartige Feststoffe, die durch Mahlen in Pulverform überführt werden können. Neben der hohen Glastemperatur weisen die Polyether eine Unlöslichkeit in unpolaren Medien sowie eine beschränkte Löslichkeit in polaren Medien auf. Durch diese Einschränkungen sind die Produkte nicht breit einsetzbar.

Die Schriften EP 44 872 und US 4,557,949 (= DE 2904979) beschreiben die Herstellung von semipermeablen Membranen, bei denen die Polykondensation von THEIC, gegebenenfalls in Kombination von weiteren Alkoholen, in Gegenwart von sauren Katalysatoren, beispielsweise H₂SO₄, auf einem Substrat, zum Beispiel Glas oder Gewebe, aufgebracht werden. Das so erhaltene Reaktionsprodukt ist vernetzt und wasserunlöslich und eignet sich nicht für weitere Umsetzungen.

WO 2009/101141 beschreibt die Herstellung von hochfunktionellen Polyetherolen, indem man mindestens einen tri- oder höherfunktionellen Alkohol und gegebenenfalls weitere di- und/oder monofunktionelle Alkohole und/oder Modifizierungsreagenzien mit Hilfe von sauren Katalysatoren umsetzt. Dabei ist auch THEIC als trifunktioneller Alkohol erwähnt. Insbesondere bei der Verwendung in Druckfarben, Lacken oder Beschichtungen macht sich aber die leicht bräunliche Verfärbung der Produkte nach WO 2009/101141 negativ bemerkbar.

Aufgabe der vorliegenden Erfindung war es daher, einen optisch klaren, farblosen, unvernetzten, hochfunktionellen Polyether zu liefern, der in unterschiedlichsten Medien löslich und mittels eines technisch einfachen und preiswerten Verfahrens industriell herstellbar ist.

Weiter war es Aufgabe einen hochfunktionellen Polyether zu liefern, der aufgrund seines definierten Aufbaus vorteilhafte Eigenschaften, wie hohe Funktionalität, hohe Reaktivität, geringe Viskosität und gute Löslichkeit, in sich vereint.

Weiter war es Aufgabe der vorliegenden Erfindung, ein Verfahren zur Herstellung dieser hochfunktionellen Polyether zu liefern.

Überraschenderweise konnte die Aufgabe konnte durch ein Verfahren gelöst werden, bei dem man THEIC und einen oder mehrere difunktionelle Alkohole und/oder Modifizierungsreagenzien mit Hilfe von sauren Katalysatoren umsetzt.

Unter einem hochfunktionellen Polyether ist im Rahmen dieser Erfindung ein Produkt zu verstehen, das neben den Ethergruppen, die das Polymergerüst bilden, end- oder seitenständig im Mittel mindestens vier, bevorzugt mindestens fünf, besonders bevorzugt mindestens sechs und speziell mindestens 8 Funktionalitäten aufweist. Als Funktionalitäten werden dabei OH-Gruppen als auch mit Modifizierungsreagenzien umgesetzte OH-Gruppen verstanden. Dabei kann das Polymergerüst linear oder verzweigt sein. Die Anzahl der end- oder seitenständigen Funktionalitäten ist prinzipiell nach oben nicht beschränkt, jedoch können Produkte mit sehr hoher Anzahl an Funktionalitäten unerwünschte Eigenschaften, wie beispielsweise eine hohe Viskosität oder schlechte Löslichkeit, aufweisen. Die hochfunktionellen Polyetherole der vorliegenden Erfindung weisen zumeist nicht mehr als 100 end- oder seitenständige Funktionalitäten, bevorzugt nicht mehr als 50 end- oder seitenständige Funktionalitäten auf. In einer besonderen Ausführungsform handelt es sich bei den Funktionalitäten um OH-Gruppen. Weiter können die Funktionalitäten aber auch alle Umsetzungsprodukte von OH-Gruppen mit Modifizierungsreagenzien sein, wie die Umsetzungsprodukte mit Monoalkoholen, Aminoalkoholen, Isocyanaten oder Lactonen.

In einer Ausführungsform handelt es sich bei den hochfunktionellen Polyethern um hochfunktionelle, hyperverzweigte Polyether. Unter hyperverzweigten Polyethern werden im Rahmen dieser Erfindung unvernetzte Polymermoleküle verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch lineare Bereiche mit funktionellen Seitengruppen aufweisen. Zur Definition von Dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, geteilt durch die Summe der mittlere Anzahl von dendritischen, linearen und terminalen Verknüpfungen, multipliziert mit 100, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Unter Farbzahl wird erfindungsgemäß die Hazen-Farbzahl verstanden, die gemäß DIN ISO 6271, ASTM D 1209 gemessen wird. Als Kalibrierstandard zur Bestimmung des Farbeindrucks wird eine Cobalt-Platinat-Lösung verwendet.

Als difunktionelle Alkohole können Ethylenglykol, Diethylenglykol, Triethylenglykol, 1,2- und 1,3-Propandiol, Dipropylenglykol, Tripropylenglykol, 1,2-, 1,3- und 1,4-Butandiol, 1,2-, 1,3- und 1,5-Pentandiol, Hexandiol, Heptandiol, Octandiol, Nonandiol, Decandiol, Dodecandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, difunktionelle Polyetherpolyole auf Basis von Ethylenoxid, Propylenoxid, Butylenoxid oder deren Gemischen, oder Polytetrahydrofuran. Weiterhin können verzweigte Diole, wie zum Beispiel Propylenglykol, 2-Methylpropandiol, Neopentylglykol, 2-Methylbutandiol, 2- oder 3-Methylpentandiol, 2-Ethyl-1,6-hexandiol, 2-Ethyl-1,3-hexandiol oder 2-Butyl-2-ethyl-1,3-propandiol verwendet werden. Selbstverständlich können difunktionelle Alkohole auch in Mischungen eingesetzt werden. Erfindungsgemäß können auch difunktionelle Alkohole zu OH-terminierten Oligomeren vorkondensiert und anschließend THEIC und gegebenenfalls der monofunktionelle Alkohol zugegeben werden. Auf diese Weise können ebenfalls hochverzweigte Polymere mit linearen Blockstrukturen erhalten werden.

Das Verhältnis von difunktionellen Alkoholen zu THEIC wird vom Fachmann je nach den gewünschten Eigenschaften des Polyethers festgelegt. Im Regelfall beträgt die Menge des oder der difunktionellen Alkohole 0 bis 99 mol %, bevorzugt 1 - 99, besonders bevorzugt 1 - 80 mol% und ganz besonders bevorzugt 1-75 mol% und insbesondere 1 bis 70 mol-%, bezogen auf die Gesamtmenge aller Alkohole in Mol. Dabei können durch im Laufe der Reaktion abwechselnde Zugabe von Diolen auch Blockcopolyether, beispielsweise Diol-terminierte Polyether erhalten werden.

Als Modifizierungsreagenzien können Verbindungen eingesetzt werden, die mit OH-Gruppen reaktive Gruppen aufweisen. Diese können zu einem beliebigen Zeitpunkt zu der Reaktion zugegeben werden. So können THEIC, Modifizierungsreagenzien und gegebenenfalls difunktioneller Alkohol zusammen vorgelegt und in einem Schritt aufkondensiert werden, es kann aber auch THEIC alleine oder zusammen mit einem difunktionellen Alkohol vorkondensiert werden und das Modifizierungsreagenz während oder erst nach Abschluss der Vorkondensation zugegeben werden.

Als Modifizierungsreagenz können Moleküle eingesetzt werden, die nur eine Alkoholgruppe aufweisen (Monoole), die mindestens eine Säuregruppe, mindestens eine Anhydridgruppe, mindestens eine Isocyanatgruppe, mindestens eine Aminogruppe oder mindestens eine Phosphonsäuregruppe aufweisen, eingesetzt werden. Dabei werden die Modifizierungsreagenzien nur in solchen Mengen eingesetzt, dass keine vernetzten Produkte erhalten werden.

Neben den mit OH-Gruppen reaktiven Gruppen können die Modifizierungsreagentien weitere, funktionelle Gruppen, wie Mercaptogruppen, primäre, sekundäre oder tertiäre Aminogruppen, Estergruppen, Carbonsäuregruppen oder deren Derivate, Sulfonsäuregruppen oder deren Derivate, Phosphonsäuregruppen oder deren Derivate, Silangruppen, Siloxangruppen, oder kurz-oder langkettige Alkylreste tragen.

Für die Modifikation mit Mercaptogruppen lässt sich zum Beispiel Mercaptoethanol einsetzten. Tertiäre Aminogruppen lassen sich zum Beispiel durch Einbau von Aminogruppenhaltigen Alkoholen, wie Triethanolamin, Tripropanolamin, Triisopropanolamin, N-Methyldiethanolamin, N-Methyldipropanolamin oder N,N-Dimethylethanolamin erzeugen. Durch Zugabe von Dicarbonsäuren, Tricarbonsäuren, Dicarbonsäureestern, wie beispielsweise Adipinsäure, Terephthalsäuredimethylester oder Tricarbonsäureestern lassen sich Estergruppen erzeugen. Weiterhin können Estergruppen durch Umsetzung der OH-Gruppen mit Lactonen, speziell mit Caprolacton, erhalten werden. Durch Reaktion mit langkettigen Alkanolen oder Alkandiolen lassen sich langkettige Alkylreste einbringen. Die Reaktion mit Alkyl- oder Arylisocyanaten, - diisocyanaten oder - oligoisocyanaten generiert entsprechende Urethangruppen aufweisende Polyether.

Sollen die Modifizierungsreagenzien erst in einem zweiten Schritt nach dem Vorkondensieren von THEIC und gegebenenfalls difunktionellem Alkohol zugegeben werden, werden als Modifizierungsreagenzien vorzugsweise Säure-, Säurehalogenid-, Anhydrid- oder Isocyanatgruppen enthaltenden Verbindungen oder Lactonen, wie Caprolacton, eingesetzt. Dabei kann bei Einsatz von Lactonen die Länge der Esterketten durch die Einsatzmenge an Lacton gesteuert werden. In einer weiteren Ausführungsform können auch mehrere Modifizierungsreagenzien eingesetzt werden, beispielsweise kann ein Modifizierungsreagenz im ersten Schritt zusammen mit THEIC und gegebenenfalls dem difunktionellen Alkohol umgesetzt werden und anschließend in einem zweiten Schritt ein weiteres Modifizierungsreagenz zu dem Umsetzungsprodukt aus dem ersten Schritt gegeben werden.

Weiterhin können die Vorkondensate durch Umsetzung mit Alkylenoxiden, zum Beispiel Ethylenoxid, Propylenoxid, Butylenoxid oder deren Gemischen, in hochfunktionelle Polyetherpolyole enthaltend lineare Polyetherketten mit einstellbarer Polarität überführt werden.

Werden die Modifizierungsreagenzien zur Hydrophobierung eingesetzt, werden vorzugsweise Monoalkanole mit mehr als 3, besonders bevorzugt mehr als 6 C-Atomen eingesetzt.

Vorzugsweise werden maximal 200, bevorzugt maximal 100 und besonders bevorzugt maximal 50 mol-% Modifizierungsreagenz, bezogen auf die Gesamtmenge THEIC zugegeben.

Zur Beschleunigung der Reaktion werden saure Katalysatoren oder Katalysatorgemische zugegeben. Geeignete Katalysatoren sind zum Beispiel Säuren mit einem pKs-Wert von weniger als 2,2, besonders bevorzugt sind starke Säuren.

Beispiel für Säuren mit einem pK_{S}-Wert von weniger als 2,2 sind beispielsweise Phosphorsäure (H₃PO₄), Phosphorige Säure (H₃PO₃), Pyrophosphorsäure (H₄P₂O₇), Polyphosphorsäure, Hydrogensulfat (HSO₄⁻), Schwefelsäure (H₂SO₄), Perchlorsäure, Salzsäure, Bromwasserstoffsäure, Chlorsulfonsäure, Methansulfonsäure, Trichlormethansulfonsäure, Trifluormethansulfonsäure, Benzolsulfonsäure oder p-Toluolsulfonsäure.

Weitere Beispiele für erfindungsgemäße saure Katalysatoren sind saure Ionenaustauscher oder Ionenaustauscherharze. Ionenaustauscher ist die Sammelbezeichnung für feste Stoffe oder Flüssigkeiten, welche fähig sind, positiv oder negativ geladene Ionen aus einer ElektrolytLösung unter Abgabe äquivalenter Mengen anderer Ionen aufzunehmen. Bevorzugt werden feste Körner und Partikel verwendet, deren Matrix durch Kondensation (Phenol-Formaldehyd) oder durch Polymerisation (Copolymere aus Styrol und Divinylbenzol sowie Methacrylaten und Divinylbenzol) erhalten wurden.

Die erfindungsgemäß verwendeten sauren Ionenaustauscher tragen zum Beispiel SulfonsäureGruppen, Carbonsäure- oder Phosphonsäure-Gruppen. Auch können Ionenaustauscher verwendet werden, die ein hydrophiles Cellulose-Gerüst besitzen oder aus vernetztem Dextran oder Agarose bestehen, und saure funktionelle Gruppen, zum Beispiel Carboxylmethyl- oder Sulfoethylgruppen, tragen. Es können auch anorganische Ionenaustauscher, wie Zeolite, Montmorillonite, Palygorskite, Bentonite und andere Aluminiumsilicate, Zirconiumphosphat, Titanwolframat und Nickelhexacyanoferrat(II) verwendet werden. Zu Ionenaustauschern siehe auch RÖMPP, Chemisches Lexikon, Online Version 3.0, oder "Ion Exchangers" von F. De Dardel und T. V. Arden, erschienen in Ullmann's Encyclopedia of Industrial Chemistry, Electronic Release 2007. Saure Ionenaustauscher sind beispielsweise in fester oder gelöster Form erhältlich unter den Produktbezeichnungen Amberlite™, Ambersept™ oder Amberjet™ von der Fa. Rohm und Haas.

Besonders bevorzugt als erfindungsgemäße Katalysatoren sind Schwefelsäure, Phosphorsäure, Polyphosphorsäure, Chlorsulfonsäure, Methansulfonsäure, Trichlormethansulfonsäure, Trifluormethansulfonsäure, Benzolsulfonsäure, p-Toluolsulfonsäure oder saure Ionenaustauscher.

Ganz besonders bevorzugt sind Schwefelsäure, Methansulfonsäure, Trifluormethansulfonsäure, p-Toluolsulfonsäure oder saure Ionenaustauscher.

Die Zugabe der Säure als Katalysator erfolgt im allgemeinen in einer Menge von 50 ppm bis 10 Gew.-%, bevorzugt von 100 ppm bis 5 Gew.-%, besonders bevorzugt 1000 ppm bis 3 Gew.-% bezogen auf die Menge des eingesetzten Alkohols oder Alkoholgemisches.

Wird ein saurer Ionenaustauscher als Katalysator verwendet, so setzt man üblicherweise eine Menge von 1000 ppm bis 30 Gew.-%, bevorzugt von 1 - 25 Gew.-%, besonders bevorzugt 1 - 20 Gew.-% bezogen auf die Menge des eingesetzten Alkohols oder Alkoholgemisches zu. Selbstverständlich können die Katalysatoren auch in Mischung eingesetzt werden.

Ferner ist es möglich, sowohl durch Zugabe des geeigneten Katalysators, als auch durch Wahl einer geeigneten Temperatur die Polykondensationsreaktion zu steuern. Weiterhin lässt sich über die Zusammensetzung der Ausgangskomponenten und über die Verweilzeit das mittlere Molekulargewicht des Polymeren sowie dessen Struktur einstellen.

Die Umsetzung erfolgt üblicherweise bei einer Temperatur von 0 bis 250 °C, bevorzugt 60 bis 220°C, besonders bevorzugt bei 100 bis 200°C und ganz besonders bevorzugt bei 130 bis 180°C in Substanz oder in Lösung. Dabei können allgemein alle Lösungsmittel verwendet werden, die gegenüber den jeweiligen Edukten inert sind. Wird Lösungsmittel eingesetzt, werden vorzugsweise organische Lösungsmittel, wie zum Beispiel Decan, Dodecan, Benzol, Toluol, Chlorbenzol, Xylol, Dimethylformamid, Dimethylacetamid oder Solventnaphtha verwendet.

In einer besonders bevorzugten Ausführungsform wird die Kondensationsreaktion zu Beginn in Gegenwart von Wasser als Lösungsmittel bzw. als Lösungsvermittler durchgeführt. Das zur Löslichkeitsvermittlung zugegebenen Wasser kann im Verlauf der Reaktion gemeinsam mit dem zusätzliche freiwerdenden Reaktionswasser zur Beschleunigung der Reaktion aus dem Reaktionsgleichgewicht entfernt werden, zum Beispiel destillativ, gegebenenfalls bei vermindertem Druck.

Die Herstellung der erfindungsgemäßen hochfunktionellen Polyetherpolyole erfolgt zumeist in einem Druckbereich von 0,1 mbar bis 20 bar, bevorzugt bei 1 mbar bis 5 bar, in Reaktoren, die im Batchbetrieb, halbkontinuierlich oder kontinuierlich betrieben werden.

Bevorzugt wird die Reaktion in einer sogenannten "Eintopffahrweise" durchgeführt, in der THEIC und difunktioneller Alkohol und/oder Modifizierungsreagenz und ggf. Lösemittel vollständig vorgelegt und die Reaktion in einem rückvermischten Reaktor durchgeführt wird. Denkbar sind aber auch Reaktionsführungen in einem mehrstufigen Reaktorsystem, beispielsweise einer Rührkesselkaskade oder einem Rohrreaktor. In einer bevorzugten alternativen Ausführungsform der vorliegenden Erfindung kann die Reaktion in einem Kneter, Extruder, Intensivmischer oder Schaufeltrockner durchgeführt werden.

Die Reaktion kann gegebenenfalls auch unter Zuhilfenahme von Ultraschall oder Mikrowellenstrahlung durchgeführt werden.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Kondensationsprodukt lagerstabil ist.

Weiterhin kann man den Katalysator deaktivieren, zum Beispiel durch Zugabe einer basischen Komponente, wie einer Lewis-Base oder einer organischen oder anorganischen Base.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Umsetzungsprodukt durch strippen, dass heißt durch Entfernen von niedermolekularen, flüchtigen Verbindungen, gereinigt. Dazu kann nach Erreichen des gewünschten Umsatzgrades der Katalysator deaktiviert werden. Anschließend werden die niedermolekularen flüchtigen Bestandteile, zum Beispiel Lösungsmittel, Ausgangsmonomere, leichtflüchtige Spaltprodukte, leichtflüchtige Oligomere oder cyclische Verbindungen oder Wasser destillativ, gegebenenfalls unter Einleitung eines Gases, vorzugsweise Stickstoff, Kohlendioxid oder Luft, gegebenenfalls bei vermindertem Druck, entfernt. In einer bevorzugten Ausführungsform wird das Produkt in einem Dünnschichtverdampfer von flüchtigen Bestandteilen befreit.

In einer besonders bevorzugten Ausführungsform wird bei nachträglicher Modifizierung mit Modifizierungsreagenz vor Einsatz des Modifizierungsreagenzes das erhaltene Vorkondensat aus THEIC und gegebenenfalls difunktionellem Alkohol wie oben beschrieben gereinigt.

Aufgrund der Beschaffenheit der Ausgangsmonomere ist es möglich, dass aus der Umsetzung Kondensationsprodukte mit unterschiedlichen Strukturen resultieren können, die Verzweigungen und cyclische Einheiten, aber keine Vernetzungen aufweisen. Die Anzahl der reaktiven Gruppen ergibt sich dabei aus der Beschaffenheit der eingesetzten Monomere und dem Polykondensationsgrad, der erfindungsgemäß so zu wählen ist, dass der Gelpunkt nicht erreicht wird.

Die erfindungsgemäßen Polyetherpolyole weisen Glastemperaturen auf, die kleiner als 70 °C, bevorzugt kleiner als 50 °C, besonders bevorzugt kleiner als 30 °C und insbesondere kleiner als 0 °C sind.

Die nach dem erfindungsgemäßen Verfahren gebildeten hochfunktionellen hochverzweigten Polyether lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Ein großer Vorteil des erfindungsgemäßen Verfahrens liegt in seiner Wirtschaftlichkeit. Sowohl die Umsetzung zu dem Polykondensationsprodukt als auch die Reaktion der Kondensationsprodukte zu Polyethern mit anderen funktionellen Gruppen oder Elementen kann in einer Reaktionsvorrichtung erfolgen, was technisch und wirtschaftlich vorteilhaft ist.

Die erfindungsgemäßen hochfunktionellen hoch- oder hyperverzweigten Polyetherole können unter anderem als Haftvermittler, Thixotropiermittel, Rheologiemodifier von Polymeren, in Druckfarben oder als Bausteine zur Herstellung von Polyadditions- oder Polykondensationspolymeren, zum Beispiel von Lacken, Überzügen, Klebstoffen, Dichtmassen, Gießelastomeren oder Schaumstoffen technisch vorteilhaft eingesetzt werden.

Sie eignen sich insbesondere zur Herstellung von Druckfarben, wie Flexo-, Tief-, Offset- oder Siebduckfarben sowie zur Herstellung von Drucklacken. Insbesondere sind die erfindungsgemäßen Polyether zur Herstellung von dünnflüssigen Druckfarben, wie Flexo- oder Tiefdruckfarben für den Verpackungsdruck geeignet. Sie können zu verschiedenen Zwecken in Druckfarben eingesetzt werden, aber insbesondere als Bindemittel, ggf. auch im Gemisch mit anderen Bindemitteln. Insbesondere eignen sich die erfindungsgemäßen hochfunktionellen Polyether in Anwendungen, in denen Verfärbungen stören, wie in Lacken, Überzügen und Farben.

Die erfindungsgemäßen Polyether werden zu diesem Zweck formuliert, beispielsweise mit geeigneten Lösemitteln, Farbmitteln, weiteren Bindemitteln sowie druckfarbentypischen Zusatzstoffen. Zu weiteren Einzelheiten zur Formulierung und Herstellung von Druckfarben mit hyperverzweigten Polymeren wird ausdrücklich auf WO 02/36695 sowie WO 02/26697 verwiesen, insbesondere auf die Ausführungen in WO 02/36695, Seite 10, Zeile 19 bis Seite 15, Zeile 14 sowie WO 02/36697, Seite 7, Zeile 14 bis Seite 10, Zeile 18 sowie die in den besagten Schriften aufgeführten Beispiele.

Druckfarben, welche die erfindungsgemäßen Polyether enthalten, weisen eine besonders gute, bislang nicht bekannte, Haftung auf den Substraten, insbesondere auf Metall- und/oder Polymerfolien auf und zeigen eine besonders hohe Farbbrillianz.

Die Druckfarben eignen sich daher auch ganz besonders zur Herstellung von Laminaten aus zwei oder mehreren Polymer- und/oder Metallfolien, bei denen eine Folie mit einer oder mehreren Schichten einer Druckfarbe bedruckt und auf die gedruckte Schicht eine zweite Folie aufkaschiert wird. Derartige Verbunde werden beispielsweise zur Herstellung von Verpackungen eingesetzt.

In einer weiteren bevorzugten Ausführungsform werden die erfindungsgemäßen hochfunktionellen Polyetherole als Bindemittelkomponente, beispielsweise in üblichen Beschichtungsmassen, wie Lacken, gegebenenfalls gemeinsam mit anderen Hydroxy- oder Aminogruppen aufweisenden Bindemitteln, zum Beispiel mit Hydroxy(meth)acrylaten, Hydroxystyryl(meth)acrylaten, linearen oder verzweigten Polyestern, Polyethern, Polycarbonaten, Melaminharzen oder Harnstoff-Formaldehydharzen, zusammen mit gegenüber Hydroxyfunktionen und gegebenenfalls gegenüber Carboxyfunktionen reaktiven Verbindungen eingesetzt, beispielsweise mit Isocyanaten, verkappten Isocyanaten, Epoxiden und/oder Aminoplasten, bevorzugt Isocyanaten, Epoxiden oder Aminoplasten, besonders bevorzugt mit Isocyanaten oder Epoxiden und ganz besonders bevorzugt mit Isocyanaten. Solche Beschichtungsmassen sind beispielsweise beschrieben in "Polyurethane für Lacke und Beschichtungen" von Manfred Bock, Vincentz Verlag, Hannover 1999.

Isocyanate sind beispielsweise aliphatische, aromatische und cycloaliphatische Di- und Polyisocyanate mit einer mittleren NCO-Funktionalität von mindestens 1,8, bevorzugt 1,8 bis 5 und besonders bevorzugt 2 bis 4, sowie deren Isocyanurate, Oxadiazintrione, Iminooxadiazindione, Harnstoffe, Biurete, Amide, Urethane, Allophanate, Carbodiimide, Uretonimine und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendüsocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1 - methylcyclohexan sowie aromatische Diisocyanate wie 2,4- oder 2,6-Toluylendiisocyanat und deren Isomerengemische, m- oder p-Xylylendüsocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Es können auch Gemische der genannten Diisocyanate vorliegen.

Als Polyisocyanate kommen beispielsweise Isocyanuratgruppen aufweisende Polyisocyanate, Uretdiongruppen aufweisende Polyisocyanate, Biuretgruppen aufweisende Polyisocyanate, Amidgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Carbodiimid- oder Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 1 bis 60 Gew.% bezogen auf das Di- und Polyisocyanat(gemisch), bevorzugt 2 bis 60 Gew.% und besonders bevorzugt 10 bis 55 Gew.%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)cyclohexan, Isophorondiisocyanat und Di(isocyanatocyclohexyl)methan, ganz besonders bevorzugt sind Isophorondiisocyanat und Hexamethylendiisocyanat, insbesondere bevorzugt ist Hexamethylendiisocyanat.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondüsocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondüsocyanat abgeleiteten. Bei Uretdiondiisocyanaten handelt es sich um cyclische Dimerisierungsprodukte von Diisocyanaten.

Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 23 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondüsocyanat mit ein- oder mehrwertigen Alkoholen wie z.B. Methanol, Ethanol, iso-Propanol, n-Propanol, n-Butanol, iso-Butanol, sek-Butanol, tert-Butanol, n-Pentanol, n-Hexanol, n-Heptanol, n-Octanol, n-Decanol, n-Dodecanol (Laurylalkohol), 2-Ethylhexanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Iminooxadiazindiongruppen enthaltende Polyisocyanate, vorzugsweise von Hexamethylendiisocyanat oder Isophorondüsocyanat abgeleitet. Solche Iminooxadiazindiongruppen enthaltenden Polyisocyanate sind aus Diisocyanaten mittels spezieller Katalysatoren herstellbar.
7) Carbodiimid- und/oder Uretonimin-modifizierte Polyisocyanate.

Die Polyisocyanate 1) bis 7) können im Gemisch, gegebenenfalls auch im Gemisch mit Diisocyanaten, eingesetzt werden.

Die Isocyanatgruppen der Di- oder Polyisocyanate können auch in verkappter Form vorliegen. Als Verkappungsmittel für NCO-Gruppen eignen sich z.B. Oxime, Phenole, Imidazole, Pyrazole, Pyrazolinone, Triazole, Diketopiperazine, Caprolactam, Malonsäureester oder Verbindungen, wie sie genannt sind in den Veröffentlichungen von Z.W. Wicks, Prog. Org. Coat. 3 (1975) 73 - 99 und Prog. Org. Coat 9 (1981), 3-28, von D.A. Wicks und Z.W. Wicks, Prog. Org. Coat. 36 (1999), 148-172 und Prog. Org. Coat. 41 (2001), 1 - 83 sowie in Houben-Weyl, Methoden der Organischen Chemie, Bd. XIV/2, 61 ff. Georg Thieme Verlag, Stuttgart 1963.

Unter Verkappungs- bzw. Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche Verbindungen mit blockierten Isocyanatgruppen kommen üblicherweise in Dual-Cure-Beschichtungsmitteln oder in Pulverlacken zur Anwendung, die über Isocyanatgruppenhärtung endgehärtet werden.

Epoxidverbindungen sind solche mit mindestens einer, bevorzugt mit mindestens zwei, besonders bevorzugt zwei bis zehn Epoxidgruppen im Molekül.

In Betracht kommen z.B. epoxidierte Olefine, Glycidylester (z.B. Glycidyl(meth)acrylat) von gesättigten oder ungesättigten Carbonsäuren oder Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ und Glycidylether mehrfunktioneller Alkohole, z.B. des Butandiol, des 1,6-Hexandiol, des Glycerin und des Pentaerythrit. Beispiele für derartige Polyepoxidverbindungen sind Epikote^{®} 812 (Epoxidwert: ca. 0,67 mol/100g) und Epikote^{®} 828 (Epoxidwert: ca. 0,53 mol/100g), Epikote^{®} 1001, Epikote^{®} 1007 und Epikote^{®} 162 (Epoxidwert: ca. 0,61 mol/100g) der Firma Resolution, Rütapox® 0162 (Epoxidwert: ca. 0,58 mol/100g), Rütapox^{®} 0164 (Epoxidwert: ca. 0,53 mol/100g) und Rütapox^{®} 0165 (Epoxidwert: ca. 0,48 mol/100g) der Firma Bakelite AG, Araldit® DY 0397 (Epoxidwert: ca. 0,83 mol/100g) der Firma Vantico AG.

Weiterhin kommen Verbindungen mit aktiven Methylol- oder Alkylalkoxygruppen, insbesondere Methylalkoxygruppen in Frage, wie z.B veretherte Umsetzungsprodukte von Formaldehyd mit Aminen, wie Melamin, Harnstoff etc., Phenol/Formaldehydaddukte, Siloxan oder Silangruppen und Anhydride, wie sie z.B. in US 5,770,650 beschrieben sind.

Unter den technisch weit verbreiteten und bekannten, bevorzugten Aminoplasten sind besonders bevorzugt Harnstoffharze und Melaminharze, wie z.B. Harnstoff-Formaldehyd-Harze, Melamin-Formaldehyd-Harze, Melamin-Phenol-Formaldehyd-Harze oder Melamin-Harnstoff-Formaldehyd-Harze, verwendbar.

Als Harnstoffharze sind solche geeignet, die durch Umsetzung von Harnstoffen mit Aldehyden erhältlich sind und gegebenenfalls modifiziert werden können.

Als Harnstoffe sind Harnstoff, N-substituierte oder N,N'-disubstituierte Harnstoffe geeignet, wie z.B. N-Methylharnstoff, N-Phenylharnstoff, N,N'-Dimethylharnstoff, Hexamethylendiharnstoff, N,N'-Diphenylharnstoff, 1,2-Ethylendiharnstoff, 1,3-Propylendiharnstoff, Diethylentriharnstoff, Dipropylentriharnstoff, 2-Hydroxypropylendiharnstoff, 2-Imidazolidinon (Ethylenharnstoff), 2-Oxohexahydropyrimidin (Propylenharnstoff) oder 2-Oxo-5-Hydroxyhexahydropyrimidin (5-Hydroxypropylenharnstoff).

Harnstoffharze können gegebenenfalls teilweise oder vollständig modifiziert werden, z.B. durch Umsetzung mit mono- od. polyfunktionellen Alkoholen, Ammoniak bzw. Aminen (kationisch modifizierte Harnstoffharze) oder mit (Hydrogen)sulfiten (anionisch modifizierte Harnstoffharze), insbesondere geeignet sind die alkoholmodifizierten Harnstoffharze.

Als Alkohole kommen für die Modifizierung C₁ - C₆-Alkohole in Frage, bevorzugt C₁ - C₄-Alkohol und insbesondere Methanol, Ethanol, iso-Propanol, n-Propanol, n-Butanol, iso-Butanol und sek-Butanol.

Als Melaminharze sind solche geeignet, die durch Umsetzung von Melamin mit Aldehyden erhältlich sind und gegebenenfalls teilweise oder vollständig modifiziert werden können.

Als Aldehyde sind insbesondere Formaldehyd, Acetaldehyd, Iso-Butyraldehyd und Glyoxal geeignet.

Melamin-Formaldehyd-Harze sind Reaktionsprodukte der Umsetzung von Melamin mit Aldehyden, z.B. den o.g. Aldehyden, insbesondere Formaldehyd. Gegebenenfalls werden die erhaltenen Methylol-Gruppen durch Veretherung mit den oben genannten ein- oder mehrwertigen Alkoholen modifiziert. Weiterhin können die Melamin-Formaldehyd-Harze auch wie oben beschrieben durch Reaktion mit Aminen, Aminocarbonsäuren oder Sulfiten modifiziert werden.

Durch Einwirkung von Formaldehyd auf Mischungen von Melamin und Harnstoff beziehungsweise auf Mischungen aus Melamin und Phenol entstehen erfindungsgemäß ebenfalls verwendbare Melamin-Harnstoff-Formaldehyd-Harze beziehungsweise Melamin-Phenol-Formaldehyd-Harze.

Die Herstellung der genannten Aminoplaste erfolgt nach an sich bekannten Verfahren.

Besonders genannte Beispiele sind Melamin-Formaldehyd-Harze, einschließlich monomerer oder polymerer Melaminharze und teilweise oder vollständig alkylierte Melaminharze, Harnstoff-Harze, z.B. Methylolharnstoffe wie Formaldehyd-Harnstoff-Harze, Alkoxyharnstoffe wie butylierte Formaldehyd-Harnstoff-Harze, aber auch N-Methylolacrylamid-emulsionen, iso-Butoxy methyl acrylamid-emulsionen, Polyanhydride, wie z.B. Polybernsteinsäureanhydrid, und Siloxane oder Silane, z.B. Dimethyldimethoxysilane.

Besonders bevorzugt sind Aminoplastharze wie Melamin-Formaldehyd-Harze oder Formaldehyd-Harnstoff-Harze.

Des weiteren können die erfindungsgemäßen hochfunktionellen Polyether auch mit α,β-ethylenisch ungesättigten Carbonsäuren oder deren Derivaten, beispielsweise (Meth)Acrylsäure oder (Meth)Acrylsäureester, zumindest teilweise ver- bzw. umgeestert werden, so daß Carbonate der Hydroxygruppen-haltigen Polyester mit den α,β-ethylenisch ungesättigten Carbonsäuren entstehen, die beispielsweise als Monomer oder Vernetzer in strahlungshärtbaren Beschichtungsmassen eingesetzt werden können.

Bei den Lacken, in denen die erfindungsgemäßen hochfunktionelle Polyether, bevorzugt hochfunktionelle Polyetherole als Bindemittel einsetzbar sind, kann sich um konventionelle Basislacke, Wasserbasislacke, im wesentlichen lösemittel- und wasserfreie flüssige Basislacke (100%-Systeme), im wesentlichen lösemittel- und wasserfreie feste Basislacke (Pulverlacke und pigmentierte Pulverlacke) oder im wesentlichen lösemittelfreie, ggf. pigmentierte Pulverlackdispersionen (Pulverslurry-Basislacke) handeln. Sie können thermisch, strahlungs- oder Dual Cure-härtbar, und selbst- oder fremdvernetzend sein.

Die erfindungsgemäßen Beschichtungsmassen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und insbesondere von Metallen oder beschichteten Metallen.

Zur Beschichtung wird üblicherweise mit den erfindungsgemäßen Beschichtungsmassen in an sich bekannter Weise beschichtet, anschließend zur Entfernung von gegebenenfalls vorhandenem Lösungsmittel getrocknet und gehärtet.

Die Beschichtung der Substrate erfolgt nach üblichen, dem Fachmann bekannten Verfahren, wobei man wenigstens eine erfindungsgemäße Beschichtungsmasse auf das zu beschichtende Substrat in der gewünschten Stärke aufbringt und die flüchtigen Bestandteile entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Die nach dem erfindungsgemäßen Verfahren gebildeten hochfunktionellen Polyether sind nach der Reaktion, also ohne weitere Modifikation, mit Hydroxylgruppen terminiert. Sie lösen sich gut in verschiedenen Lösemitteln, zum Beispiel in Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Die vorliegende Erfindung soll anhand der nachfolgenden Beispiele näher erläutert werden.

Analytik und Prüfmethoden:
Molekulargewichte und Molekulargewichtsverteilungen wurden per Gelpermeationschromatographie mit einem Refraktometer als Detektor analysiert. Als mobile Phase wurde, wenn nicht anders angegeben, Dimethylacetamid verwendet, als Standard zur Bestimmung des Molekulargewichts wurde Polymethylmethacrylat (PMMA) eingesetzt.

Die DSC- Messung erfolgte mit einem Wärmeflusskalorimeter DSC-7 der Firma Perkin-Elmer. Hierzu wurden 5-7 mg der Probe in einen Aluminiumtiegel eingewogen und in einem Temperaturbereich von -100 bis + 100 °C bei einer Heiz- und Kühlrate von 10 K·min⁻¹ gemessen. Die Glasübergangstemperatur (Tg) bzw. der Schmelzpunkt (Schmp.) wurde aus der zweiten Aufheizkurve bestimmt.

Die Bestimmung der OH-Zahl (mg KOH/g) erfolgte nach DIN 53240, Teil 2.

Beispiel 1 (Vergleich): Herstellung eines Polyetherpolyols auf Basis THEIC in Anlehnung an US 3,293,224

Die Polykondensation wurde in einem 2 L Glaskolben, ausgerüstet mit Rührer, Innenthermometer und Destillationseinheit durchgeführt. Die Mischung aus 522 g THEIC, 150 g Wasser und 6,4 g Schwefelsäure (95 Gew.-%) wurde auf 80°C erwärmt und bei Normaldruck 1 h gerührt. Dann wurde die Innentemperatur auf 130°C erhöht, wobei erstes entstehendes Reaktionswasser und flüchtige Nebenprodukte abdestillierten. Nun wurde die Temperatur langsam bis auf 165°C erhöht und übergehendes Destillat gesammelt. Nach 2h Reaktion bei 165°C wurde die heiße Reaktionsmischung in eine Aluminiumschale gegossen und abgekühlt.

Das Produkt wies folgende Kennzahlen auf:
Tg: 53 °C
GPC: Mn = 2500, Mw = 20000 [g/mol]

Beispiel 2: Herstellung eines erfindungsgemäßen Polyetherpolyols auf Basis THEIC und 1,4-Butandiol

Die Polykondensation wurde in einem 2 L Glaskolben, ausgerüstet mit Rührer, Innenthermometer und Destillationseinheit durchgeführt. Die Mischung aus 261,2 g THEIC, 90,1 g 1,4-Butandiol, 100 g Wasser und 1 g Schwefelsäure (95 Gew.-%ig) wurde auf 90°C erwärmt und bei Normaldruck 3 h gerührt. Dann wurde die Innentemperatur langsam auf 165°C erhöht, 3 h gerührt, und übergehendes Destillat gesammelt. Danach wurde die heiße Reaktionsmischung in eine Aluminiumschale gegossen und abgekühlt.

Das Produkt wies folgende Kennzahlen auf:
Tg: 30,6 °C
GPC: Mn = 2000, Mw = 7600 [g/mol]
OH-Zahl: 325 mg KOH/g

Beispiel 3: Herstellung eines erfindungsgemäßen Polyetherpolyols auf Basis THEIC und 1,5-Pentandiol

Die Polykondensation wurde in einem 2 L Glaskolben, ausgerüstet mit Rührer, Zulaufgefäß, Innenthermometer und Destillationseinheit durchgeführt. Die Mischung aus 522,6 g THEIC, 200 g Wasser und 1 g Schwefelsäure (95 Gew.-%ig) wurde auf 90°C erwärmt und bei Normaldruck 1 h gerührt. Dann wurde die Innentemperatur langsam auf 150°C erhöht und das eingesetzte Wasser (200g) als Destillat gesammelt. Danach wurde die Temperatur auf 100 °C gesenkt und 208,3 g 1,5-Pentandiol zugegeben. Nun wurde die Temperatur auf 160°C erhöht, wobei weiteres Destillat überging. Nach 3 h Reaktionsdauer wurde das heiße Reaktionsgemisch in eine Aluminiumschale gegossen und abgekühlt.

Das Produkt wies folgende Kennzahlen auf:
Tg: 15,6 °C
GPC: Mn = 1400, Mw = 2700 [g/mol]
OH-Zahl: 377 mg KOH/g

Beispiel 4: Herstellung eines erfindungsgemäßen Polyetherpolyols auf Basis THEIC und 1,10-Decandiol

Die Polykondensation wurde in einem 4 L Glaskolben, ausgerüstet mit Rührer, Innenthermometer und Destillationseinheit durchgeführt. Die Mischung aus 783,9 g THEIC, 441 g 1,10-Decandiol, 200 g Wasser und 3 g Schwefelsäure (95 Gew.-%ig) wurde auf 90°C erwärmt und bei Normaldruck 1 h gerührt. Dann wurde die Innentemperatur langsam auf 170°C erhöht und das entstehende Destillat entfernt. Nach 11 h Reaktionsdauer wurde die Temperatur auf 120 °C gesenkt, mit 50%iger wässriger NaOH-Lösung neutralisiert, in eine Aluminiumschale gegossen und abgekühlt.

Das Produkt wies folgende Kennzahlen auf:
Tg: -20,1 °C
GPC: Mn = 1500, Mw = 16400 [g/mol]
OH-Zahl: 243 mg KOH/g

Beispiel 5: Herstellung eines erfindungsgemäßen Polyetherpolyols auf Basis THEIC und Diethylenglykol

Die Polykondensation wurde in einem 4 L Glaskolben, ausgerüstet mit Rührer, Innenthermometer und Destillationseinheit durchgeführt. Die Mischung aus 1045,2 g THEIC, 424,2 g Diethylenglykol, 300 g Wasser und 3 g Schwefelsäure (95 Gew.-%ig) wurde auf 90°C erwärmt und bei Normaldruck 1 h gerührt. Dann wurde die Innentemperatur langsam auf 170°C erhöht, 10 h gerührt, und übergehendes Destillat gesammelt. Danach wurde die Reaktionsmischung auf 120°C abgekühlt, mit 50%iger wässriger NaOH-Lösung neutralisiert, in eine Aluminiumschale gegossen und abgekühlt.

Das Produkt wies folgende Kennzahlen auf:
Tg: -4 °C
GPC: Mn = 2200, Mw = 63500 [g/mol]
OH-Zahl: 243 mg KOH/g

Beispiel 6: Herstellung eines erfindungsgemäßen Polyetherpolyols auf Basis THEIC und Polyethylenglykol (Molekulargewicht 200 g/mol)

Die Polykondensation wurde in einem 2 L Glaskolben, ausgerüstet mit Rührer, Innenthermometer und Destillationseinheit durchgeführt. Die Mischung aus 522,6 g THEIC, 400 g Polyethylenglykol (Pluriol E 200, BASF SE), 200 g Wasser und 1 g Schwefelsäure (95 Gew.-%ig) wurde auf 90°C erwärmt und bei Normaldruck 1 h gerührt. Dann wurde die Innentemperatur langsam auf 170°C erhöht, 3 h gerührt, und übergehendes Destillat gesammelt. Danach wurde die Reaktionstemperatur auf 120°C gesenkt, das Produkt heiß in eine Aluminiumschale gegossen und abgekühlt.

Das Produkt wies folgende Kennzahlen auf:
Tg: -25 °C
GPC: Mn = 2900, Mw = 92000 [g/mol]
OH-Zahl: 228 mg KOH/g

Beispiel 7: Herstellung eines erfindungsgemäßen Polyetherpolyols auf Basis THEIC und Neopentylglykol (NPG)

Die Polykondensation wurde in einem 4 L Glaskolben, ausgerüstet mit Rührer, Innenthermometer und Destillationseinheit durchgeführt. Die Mischung aus 522,6 g THEIC, 624,9 g NPG, 300 g Wasser und 3 g Schwefelsäure (95 Gew.-%ig) wurde auf 90°C erwärmt und bei Normaldruck 2 h gerührt. Dann wurde die Innentemperatur langsam über einen Zeitraum von 8 h auf 170°C erhöht, wobei übergehendes Destillat gesammelt wurde. Danach wurde die Reaktionsmischung auf 120°C abgekühlt, mit 50%iger wässriger NaOH-Lösung neutralisiert, in eine Aluminiumschale gegossen und abgekühlt.

Das Produkt wies folgende Kennzahlen auf:
T_{g}: -19,4 °C
GPC: Mn = 900, Mw = 1800 [g/mol]
OH-Zahl: 390 mg KOH/g

Beispiel 8: Herstellung eines erfindungsgemäßen Polyetherpolyols auf Basis THEIC und 2-Butyl-2-Ethyl-1,3-propandiol (BEPD)

Die Polykondensation wurde in einem 2 L Glaskolben, ausgerüstet mit Rührer, Innenthermometer und Destillationseinheit durchgeführt. Die Mischung aus 392,0 g THEIC, 240,4 g BEPD, 200 g Wasser und 1 g Schwefelsäure (95 Gew.-%ig) wurde auf 90°C erwärmt und bei Normaldruck 2 h gerührt. Dann wurde die Innentemperatur langsam über einen Zeitraum von 8 h auf 170°C erhöht, wobei übergehendes Destillat gesammelt wurde. Danach wurde die Reaktionsmischung auf 120°C abgekühlt, mit 50%iger wässriger NaOH-Lösung neutralisiert, in eine Aluminiumschale gegossen und abgekühlt.

Das Produkt wies folgende Kennzahlen auf:
T_{g}: -14,7 °C
GPC: Mn = 800, Mw = 1600 [/mol]
OH-Zahl: 335 mg KOH/g

Beispiel 9: Herstellung eines erfindungsgemäßen Polyetherpolyols auf Basis THEIC und Stearylalkohol

Die Polykondensation wurde in einem 4 L Glaskolben, ausgerüstet mit Rührer, Innenthermometer und Destillationseinheit durchgeführt. Die Mischung aus 1045,2 g THEIC, 108,2 g Stearylalkohol, 300 g Wasser und 3 g Schwefelsäure (95 Gew.-%ig) wurde auf 90°C erwärmt und bei Normaldruck 3 h gerührt. Dann wurde die Innentemperatur langsam auf 150°C erhöht und übergehendes Destillat gesammelt. Nach 2 h wurde der Reaktionsansatz auf 80°C abgekühlt und das Produkt in eine Aluminiumschale gegossen.

Das Produkt wies folgende Kennzahlen auf:
Tg: 46,6 °C, Schmp. 61,3 °C
GPC: Mn = 1000, Mw = 2100 [g/mol]
OH-Zahl: 350 mg KOH/g

Beispiel 10 (Vergleich): Herstellung eines Polyetherpolyols auf Basis Pentaerythrit und Triethylenglykol gemäß WO 2009/101141.

Die Polymerisation wurde in einem 1 L Glaskolben ausgerüstet mit einem Rührer, Rückflußkühler und einer Destillationsbrücke mit Vakuumanschluß durchgeführt. Die Mischung aus 225.9 g Pentaerythrit (1.66 mol), 249.1 g Triethylenglykol (1.66 mol) und 4.8 g p-Toluolsulfonsäure Monohydrat (1 Gew.-%) wurde evakuiert und bei einem Druck von 12 mbar langsam mittels Ölbad auf 200°C erwärmt. Nach Erreichen der Reaktionstemperatur wurde das Reaktionsgemisch 15 h gerührt. Danach ließ man die Reaktionsmischung unter Vakuum abkühlen. Das Rohprodukt wurde in 1 L Methanol aufgenommen und unumgesetztes Pentaerythrit abfiltriert. Zur Neutralisation wurde der Reaktionslösung 10 g basisches Aluminiumoxid (MP ALUMINA B ACTIVITY SUPER I; 04571, MP Ecochrom) zugegeben, 2 h gerührt und über Nacht bei -20 °C inkubiert. Nach dem Auftauen wurden unlösliche Bestandteile über Celite abfiltriert und die Reaktionsmischung anschließend am Rotationsverdampfer bei 40°C und einem Unterdruck von bis zu 22 mbar zur Trockne eingedampft.

Das Rohprodukt wurde zur Entfernung von unreagiertem Ethylenglykol zweimal mittels Dünnschichtverdampfer bei einer Öltemperatur von 195°C und einem Druck von 1-5*10-2mbar gereinigt. Man erhielt 248 g (52 Gew.-%) Polyetherpolyol.

Das Produkt wies folgende Kennzahlen auf:
Tg : -32 °C
GPC: Mn = 1100, Mw = 13000 [g/mol], gemessen in Hexafluorisopropanol als mobile Phase.
OH-Zahl: 450 mg KOH/g

Tabelle 1 zeigt das Löslichkeitsverhalten von je 1 g der erfindungsgemäßen Polyetherpolyole in 100 ml Lösemittel bei Raumtemperatur.

**Tabelle 1**

| Polymer aus Beispiel | Wasser | Ethanol | 2-Butanon | Ethylacetat | Butylacetat |
|---|---|---|---|---|---|
| 1 (Vgl.) | + | - | - | - | - |
| 4 | - | - | + | - | - |
| 7 | - | + | + | + | + |
| 8 | - | + | + | - | - |

| | | | | | |
|---|---|---|---|---|---|
| + : löslich - : nicht löslich | | | | | |

Die erfindungsgemäßen Polyetherpolyole weisen eine deutlich bessere Löslichkeit als das Vergleichspolymer 1 (THEIC-Homopolymerisat) auf, das in vielen gängigen Lösemitteln wie Ethanol, 2-Butanon oder Ethylacetat oder Butylacetat unlöslich ist. Weiterhin weisen die erfindungsgemäßen Polyetherole eine deutlich geringere Glasübergangstemperatur (Tg) auf, was zu einer deutlich verbesserten Filmbildung bei der Anwendung in Oberflächenbeschichtungen führt.

Tabelle 2 zeigt die Hazen-Farbzahlen der erfindungsgemäßen Produkte, gemessen als 50 Gew.-% ige Lösung in Dimethylacetamid. Dabei wurde die Hazen-Farbzahl nach DIN ISO 6271, ASTM D 1209 bestimmt. Als Kalibrierstandard wurde eine Cobalt-Platinat-Lösung verwendet. Für die Messung wurden die Produkte 50 Gew.-% ig in Dimethylacetamid gelöst und die Lösung vor der Farbzahlmessung mittels Einwegspritze durch einen als Einwegspritzenvorsatz ausgelegten Membranfilter, Marke Sartorius Minisart RC 25 (Porengröße 0,45 Mikrometer), gegeben.

| Polymer aus Beispiel | Farbzahl (Hz) |
|---|---|
| 2 | 29 |
| 3 | 41 |
| 4 | 32 |
| 5 | 96 |
| 6 | 24 |
| 7 | 37 |
| 8 | 71 |
| 9 | 38 |
| 10 (Vgl.) | 820 |

Beispiele 11 (Vergleich) und 12: Einsatz der erfindungsgemäßen Polyether in Lackformulierungen

Herstellung der Lacke:
Für die Herstellung der Lacke wurde aus dem erfindungsgemäßen Polyetherpolyol aus Beispiel 7 eine 80 Gew.-% ige Lösung in Butylacetat hergestellt. Die OH-Zahl der Lösung betrug 312 mg KOH/g.

Alle Lackmischungen wurden mit einem Index von 100 bei Raumtemperatur angesetzt, also einem stöchiometrischen Verhältnis von Isocyanat- zu Hydroxylgruppen. Als Isocyanat wurde Basonat® LR 9046 der BASF SE, ein Polyisocyanurat auf Basis von Hexamethylendiisocyanat mit einem NCO-Gehalt von ca. 23,0 Gew.% eingesetzt. Die Viskosität wurde durch Zugabe von Butylacetat auf eine Auslaufzeit auf ca. 20 s eingestellt. Dabei wurde die Auslaufzeit auf Basis von ISO 2431 und EN 535 im DIN 4 Becher bei Raumtemperatur gemessen. Angegeben wird die Zeitspanne vom Beginn des Ausfließens bis zum Abreißen des Flüssigkeitsfadens in Sekunden.

Die Lacke wurden bei Raumtemperatur mit einem Kastenrakel 180 µm nass auf ein Stahlblech als Substrat aufgerakelt. Die Lackschichtdicke nach Trocknung betrug im Mittel ca. 40 µm.

Als Vergleichsbeispiel 11 wurde ein Lack betrachtet, der anstelle des Polyols aus Beispiel 7 ausschließlich Joncryl 922® der BASF SE, eine 80 Gew.-% ige Lösung eines Polyacrylatpolyols in Butylacetat mit einer OH-Zahl von ca. 140 mg KOH/g, enthielt. Bei Joncryl 922® handelt es sich um einen kommerziellen Lackrohstoff. Dagegen werden in Beispiel 12 50 Gew.-% des eingesetzten Joncryl 922® durch das Polyol aus Beispiel 7 ersetzt.

Tabelle 3 gibt einen Überblick über die Zusammensetzung des erfindungsgemäßen Beispiels und des Vergleichs-Lacks, Tabellen 4 und 5 über die vergleichenden Eigenschaften.

**Tabelle 3:**

| Beispiel Nr. | | 11 (Vgl.) | | 12 | |
|---|---|---|---|---|---|
| | nichtflüchtiger Anteil | | fest | | fest |
| Basonat® LR 9046 | 100,0% | 10,94 | 10,94 | 38,82 | 38,82 |
| Polyol aus Beispiel 7 | 80,0% | | | 28,13 | 22,50 |
| Joncryl 922® | 80,0% | 30,00 | 24,00 | 28,13 | 22,50 |
| Butylacetat | 0% | 15,50 | | 30,00 | |
| Masse Lack [g] | | 56,44 | 34,94 | 125,07 | 83,82 |
| nichtflüchtiger Anteil (NFA) | | 61,9% | | 67,0% | |
| Auslaufzeit | | 20 s | | 19,7 s | |

Der nichtflüchtige Anteil wurde ermittelt indem 1 g der Lackmischung bzw. des Einsatzstoffes eine Stunde bei 125 °C im Umluftofen getrocknet wurden. Das Restgewicht, bezogen auf den Anfangswert (=100%), gibt den nichtflüchtigen Anteil an.

Tabelle 4 zeigt die Bestimmung der Lackhärte über den Pendeldämpfungsanstieg. Dazu wurde der Lack nach Auftragung im Klimaraum über 4 Tage bei Raumtemperatur (23°C) und 50% relativer Luftfeuchte und anschließend 15 h bei 60°C getrocknet. Die Pendeldämpfung ergibt sich nach König in Anzahl Schwingungen auf Grundlage von DIN EN ISO 1522.

**Tabelle 4**

| Beispiel Nr. | | 11 (vgl.) | | 12 | |
|---|---|---|---|---|---|
| Schichtdicke nach Trocknung | | 35 - 45 µm | | 35 - 45 µm | |
| Gelierzeit | ( h : min ) | 4h 59min | | 15h 36min | |
| Pd.-anstieg | 4 h | --- | --- | --- | --- |
| Pd.-anstieg | 7h | 14 | 13 | --- | --- |
| Pd.-anstieg | 24 h | 55 | 54 | 35 | 37 |
| Pd.-anstieg | 4d | 70 | 69 | 112 | 112 |
| Pd.-anstieg | 4d + 15h bei 60°C | 83 | 81 | 119 | 118 |

Tabelle 5 zeigt die Bestimmung der Lackeigenschaften nach ablüften, einbrennen und Lagerung. Dazu werden die Lacke nach dem Auftragen 15 min. bei 23 °C und 50 % relativer Luftfeuchtigkeit Ablüften lassen und anschließend 30 Minuten bei 60 °C eingebrannt. Die so hergestellten Lacke werden 5 Tage bei 23 °C und 50% relativer Luftfeuchte gelagert und anschließend vermessen. Die Ergebnisse sind in Tabelle 5 angegeben. Dabei erfolgt der Aceton-Doppelhub-Test mit einem Aceton-getränkten Wattebausch. Dieser wurde solange per Hand mit Doppelhüben auf dem Lack gerieben, bis der Lack bis auf das Blech durchgerieben war. Die Anzahl der dafür nötigen Doppelhübe ist angegeben. Bei hundert Hüben wurde der Versuch abgebrochen, das heißt, der Wert 100 gibt an, dass der Lack bei diesem Test nicht durchgerieben werden konnte.

Die Haftung mit Gitterschnitt wurde nach DIN 53151 in Noten ermittelt, die Note 0 gibt dabei die Bestnote, d.h. keine sichtbare Ablösung des Lackes, wieder.

Die Kratzbeständigkeit wurde gemäß Scotch-Brite-Test (Kratztest) bestimmt. Dazu wurde an einem 500 g Schlosserhammer mit doppelseitigem Klebeband am Kopf ein Faservlies (Scotchbrite, 7448 Typ S ultrafine) angebracht. Der Hammer wurde dann mit zwei Fingern am Stielende gehalten und mit gleichmäßigen Doppelhüben ohne Verkanten und ohne zusätzliche Druckaufbringung auf einer Linie über den Lackfilm vor- und zurückbewegt. Der Glanz der Oberfläche wurde nach 10 bzw. 50 Doppelhüben gemessen. Nach der Glanzmessung wurde der Lack vor einer weiteren Belastung 60 Minuten im Umluftofen bei 60 °C getempert (Reflow) und anschließend auf Raumtemperatur abgekühlt. Der Glanz wurde quer zur Scheuer-Richtung bestimmt. Das Faservlies wurde jeweils nach einem Belastungscyclus erneuert. Die Glanzmessung erfolgte mit dem Glanzmessgerät Mikro TRI-Gloss bei 20° und 60° Einfallwinkel.

**Tabelle 5**

| Beispiel Nr. | | 11 (vgl.) | 12 |
|---|---|---|---|
| Schichtdicke | | 35 - 45 µm | 35 - 45 µm |
| Gitterschnitt | ( Note ) | 0 | 0 |
| Acetontest | ( Doppelhübe ) | 100 | 100 |
| Kratztest | Glanz ( 60° ) | 98,5 | 101,0 |
| Kratztest | 10 DH (60°) | 21,1 | 35,5 |
| Kratztest | 50 DH (60°) | 13,4 | 32,5 |
| Kratztest | Reflow ( 60° ) | 20,2 | 78,1 |
| Kratztest | Glanz ( 20° ) | 92,6 | 93,6 |
| Kratztest | 10 DH ( 20° ) | 5,8 | 9,2 |
| Kratztest | 50 DH ( 20° ) | 3,0 | 7,5 |
| Kratztest | Reflow ( 20° ) | 10,0 | 61,9 |

Ergebnis der Prüfungen:
Der Einsatz der erfindungsgemäßen Polymere führt zu einer Verlängerung der Gelzeit und damit der Verarbeitbarkeit sowie zu einer Verbesserung der Härte bei vergleichbarer Elastizität und Haftung im Gitterschnitt. Ebenfalls führt der Einsatz der erfindungsgemäßen Polymere zu einer deutlichen Verbesserung der Kratzbeständigkeit (siehe Tabellen 4 und 5).

## Patentansprüche

1. Verfahren zur Herstellung von hochfunktionellen Polyethern mit einer Hazen-Farbzahl von kleiner 500, indem man Tris(hydroxyethyl)isocyanurat (THEIC) und einen oder mehrere difunktionelle Alkohole und/oder Modifizierungsreagenzien mit Hilfe von sauren Katalysatoren umsetzt.

2. Verfahren nach Anspruch 1, **dadurch gekennzeichnet, dass** der hochfunktionelle Polyether eine Funktionalität von im Mittel 4 bis 100 aufweist.

3. Verfahren nach Anspruch 1 oder 2, **dadurch gekennzeichnet, dass** die Menge an difunktionellem Alkohol, bezogen auf die Menge an THEIC und difunktionellem Alkohol, 1 bis 99 mol-% beträgt.

4. Verfahren nach einem der Ansprüche 1 bis 3, **dadurch gekennzeichnet, dass** die Difunktionellen Alkohole ausgewählt sind aus der Gruppe, bestehend aus Monoethylenglykol, Diethylenglykol, Triethylenglykol, 1,2- Propandiol, 1,3-Propandiol, Dipropylenglykol, Tripropylenglykol, 1,2- Butandiol, 1,3- Butandiol, 1,4-Butandiol, 1,2- Pentandiol, 1,3- Pentandiol, 1,5-Pentandiol, Hexandiol, Heptandiol, Octandiol, Nonandiol, Decandiol, Dodecandiol, Cyclopentandiol, Cyclohexandiol, Cyclohexandimethanol, Bis(4-Hydroxycyclo-hexyl)methan, Bis(4-Hydroxycyclohexyl)ethan, 2,2- Bis(4-Hydroxycyclohexyl)propan, difunktionelle Polyetherpolyole auf Basis von Ethylenoxid, Propylenoxid, Butylenoxid oder deren Gemischen, Polytetrahydrofuran, 2-Methylpropandiol, Neopentylglykol, 2-Methylbutandiol, 2- oder 3-Methylpentandiol, 2-Ethyl-1,6-hexandiol, 2-Ethyl-1,3-hexandiol, 2-Butyl-2-ethyl-1,3-propandiol oder Mischungen aus zwei oder mehr dieser Diole.

5. Verfahren nach einem der Ansprüche 1 bis 4, **dadurch gekennzeichnet, dass** als Modifizierungsreagens ein Mercaptogruppen haltiger Alkohol, ein Aminogruppen haltiger Alkohol, und/oder einen hydrophoben Alkohol einsetzt.

6. Verfahren nach einem der Ansprüche 1 bis 5, **dadurch gekennzeichnet, dass** als Modifizierungsreagens ein Reagenz, ausgewählt aus der Gruppe, bestehend aus säurehalogenidgruppenhaltigen Verbindungen, isocyanatgruppenhaltigen Verbindungen, anhydridhaltigen Verbindungen, Lactonen oder Alkylenoxiden eingesetzt wird.

7. Verfahren nach einem der Ansprüche 1 bis 4, **dadurch gekennzeichnet, dass** kein Modifizierungsreagenz eingesetzt wird.

8. Hochfunktionelles Polyetherol mit einer Hazen-Farbzahl von kleiner 500, erhältlich nach einem der Ansprüche 1 bis 7.

9. Verwendung eines hochfunktionellen Polyetherols nach Anspruch 8 in Druckfarben, Lacken oder Beschichtungen, als Bausteine zur Herstellung von Polyadditions- oder Polykondensationspolymeren oder als Bestandteil von Lacken, Überzügen, Klebstoffen, Dichtmassen, Gießelastomeren oder Schaumstoffen.

10. Beschichtungsmasse, enthaltend einen hochfunktionellen Polyether nach Anspruch 8.
